# EUROPÄISCHE PATENTSCHRIFT

(11) **EP 1 472 922 B1**
(45) Veröffentlichungstag und Bekanntmachung des Hinweises auf die Patenterteilung: **21.07.2010**
(21) Anmeldenummer: 04101683.3
(22) Anmeldetag: 22.04.2004
(51) Int. Cl.: A01B 59/041

(54) **Kopplungsvorrichtung**
Coupling device
Dispositif d'accouplement

(30) Priorität: 28.04.2003 US 424318
(43) Veröffentlichungstag der Anmeldung: 03.11.2004
(73) Patentinhaber: DEERE & COMPANY, Moline, Illinois 61265-8098 (US)
(72) Erfinder: Harting, Michael, Carl, 50561, La Porte City (US); Kollath, Michael, Dean, 50651, La Porte City (US)
(74) Vertreter: Holst, Sönke

(56) Entgegenhaltungen:
- US-A- 2 783 058
- US-A- 2 987 126
- US-A- 4 116 458
- US-A- 4 601 486
- US-A- 4 790 557

## Beschreibung

Die Erfindung betrifft eine Kopplungsvorrichtung zum Anbringen an einem Rahmen eines industriellen oder landwirtschaftlichen Nutzfahrzeugs, insbesondere an einen Traktor (siehe z.B. US 4 790 557).

Landwirtschaftlich genutzte Traktoren weisen Kopplungsvorrichtungen für Arbeitsgeräte auf, welche auch Dreipunkt-Geräteaufbauten (Hitches) genannt werden. Solche Kopplungsvorrichtungen umfassen drehbar/schwenkbar gelagerte Unterlenker, um an ein Arbeitsgerät oder an einen Schnellkuppler adaptiert zu werden. Solche Unterlenker sind seitlich wirkenden Lasten ausgesetzt und schwingen bzw. lenken seitlich aus, wenn der Traktor dreht und ein Arbeitsgerät noch Bodenkontakt aufweist. Aus der US 4,216,957 ist eine Kopplungsvorrichtung mit rechten und linken Begrenzungsstreben bekannt, welche angeordnet werden können, so dass ein seitliches Ausschwingen verhindert oder möglich ist. Weiterhin sind Begrenzungsmittel in Form von Anschlägen oder Blöcken bekannt, welche üblicherweise am Rahmen einer Kopplungsvorrichtung oder eines Fahrzeugs montiert werden und welche die seitliche Bewegung bzw. Auslenkung der Unterlenker begrenzen. Weiterhin ist bekannt, solche herkömmliche Begrenzungsmittel in vertikaler Richtung konisch auszugestalten, um einen maximalen Ausschlag zu ermöglichen, wenn die Kopplungsvorrichtung sich im abgesenkten Zustand befindet und keinen Ausschlag zu ermöglichen oder zu erlauben, wenn die Kopplungsvorrichtung sich in einer ausgehobenen Transportposition befindet.

Da jedoch die Räder landwirtschaftlicher Traktoren größer werden, müssen die Unterlenker relativ zum Rahmen des Fahrzeugs abgesenkt werden, um eine erforderliche Höhe zum Untergrund einzuhalten. Zum Begrenzen der Seitwärtsbewegung der Kopplungsvorrichtung werden daher die Begrenzungsmittel nach unten unterhalb des Rahmens des Fahrzeugs verlängert. Seitlich wirkende Lasten können die unteren Bereiche der Begrenzungsmittel beschädigen, die beispielsweise nicht vom Rahmen des Fahrzeugs abgestützt sind.

Die der Erfindung zugrunde liegende Aufgabe wird darin gesehen, eine Kopplungsvorrichtung der eingangs genannten Art anzugeben und weiterzubilden, durch welches die vorgenannten Probleme überwunden werden. Insbesondere soll die Kopplungsvorrichtung auch für Nutzfahrzeuge geeignet sein, an welche größere Räder anbaubar sind und bei welchen die Begrenzungsmittel vor Beschädigungen aufgrund von seitlichen, auf die Kopplungsvorrichtung wirkenden Lasten geschützt sind.

Die Aufgabe wird erfindungsgemäß durch die Lehre des Patentanspruchs 1 und 2 gelöst. Weitere vorteilhafte Ausgestaltungen und Weiterbildungen der Erfindung gehen aus den Unteransprüchen hervor.

Erfindungsgemäß umfasst eine Kopplungsvorrichtung der eingangs genannten Art zwei Unterlenker, ein Führungsmittel für ein Zugpendel, zwei Begrenzungsmittel und eine Platte zum Verkeilen. Die Unterlenker sind drehbar/schwenkbar an dem Rahmen angebracht. Das Führungsmittel ist zwischen den Unterlenkern an dem Rahmen befestigbar. Die zwei Begrenzungsmittel sind an gegenüberliegenden Seiten des Rahmens befestigbar. Jedes Begrenzungsmittel weist ein oberes Ende auf, welches an einer Seite des Rahmens befestigbar ist und welches sich im Wesentlichen nach unten zu einem unteren freien Ende erstreckt. Die Platte ist unterhalb des Führungsmittels anbringbar und insbesondere daran befestigbar. Die Platte erstreckt sich im Wesentlichen lateral von einer linken endseitigen Oberfläche zu einer rechten endseitigen Oberfläche. Jeweils eine endseitige Oberfläche kommt komplementär mit einer inneren Oberfläche des jeweiligen Begrenzungsmittels zur Anlage.

Die eingangs genannte Aufgabe wird alternativ auch durch die Merkmale des Patentanspruchs 2 gelöst. Demgemäß weist eine Kopplungsvorrichtung der eingangs genannten Art zwei Unterlenker, ein Führungsmittel für ein Zugpendel, zwei Begrenzungsmittel und zwei Platten zum Verkeilen auf. Die Unterlenker sind drehbar/schwenkbar an dem Rahmen angebracht. Das Führungsmittel ist zwischen den Unterlenkern an dem Rahmen befestigbar. Die zwei Begrenzungsmittel sind an gegenüberliegenden Seiten des Rahmens befestigbar. Jedes Begrenzungsmittel weist ein oberes Ende auf, welches an einer Seite des Rahmens befestigbar ist und welches im Wesentlichen sich nach unten zu einem unteren freien Ende erstreckt. Die Platten sind unterhalb des Führungsmittels anbringbar und insbesondere daran befestigbar. Die Platten sind - vorzugsweise voneinander beabstandet - angeordnet und an gegenüberliegenden Enden des Führungsmittels befestigbar. Jede Platte weist eine endseitige Oberfläche auf, welche komplementär mit einer inneren Oberfläche eines jeweiligen Begrenzungsmittels zur Anlage kommt.

Somit wirkt die Platte bezüglich der zwei Begrenzungsmittel wie ein Keil, indem sie nämlich die unteren Endbereiche der zwei Begrenzungsmittel auf Abstand hält bzw. bis zu einem gewissen Grad "auseinander drückt". Da die endseitigen Oberflächen der Platte bzw. der Platten mit den inneren Oberflächen der jeweiligen Begrenzungsmittel zum Anschlag kommen, werden in ganz besonders vorteilhafter Weise die Begrenzungsmittel gegen seitlich wirkende Lasten abgestützt, beispielsweise durch die von den Unterlenkern auf die Begrenzungsmittel übertragen Kräfte.

Jedes Begrenzungsmittel könnte von einer breiteren vorderen Seite zu einer schmaleren hinteren Seite konisch ausgebildet sein. Nicht zuletzt hierdurch wird eine innere Oberfläche gebildet, welche nach innen und nach hinten gerichtet ist.

Bevorzugt sind die endseitigen Oberflächen der Platte bzw. der Platten angewinkelt ausgebildet, um in komplementären Eingriff mit der inneren Oberfläche des jeweiligen Begrenzungsmittels zu kommen, insbesondere dann, wenn die Begrenzungsmittel - wie oben beschrieben - konisch ausgebildet sind. Unter einer angewinkelten Ausbildung der endseitigen Oberfläche der Platte ist insbesondere eine nicht parallele Anordnung bzw. Orientierungen der Oberflächen zueinander gemeint.

Ganz besonders bevorzugt ist die Platte bzw. sind die Platten in verschiedenen Relativpositionen an dem Führungsmittel befestigbar.

Die Platte könnte eine vordere Seite und eine hintere Seite aufweisen, wobei in lateraler Richtung die hintere Seite länger als die vordere Seite ist.

Bevorzugt ist das untere freie Ende eines Begrenzungsmittels unterhalb einer Ebene angeordnet, welche durch die untere Oberfläche des Führungsmittels definiert ist.

In einer bevorzugten Ausführungsform weist die Platte mehrere Schlitze oder Langlöcher auf. Die Platte könnte mit Hilfe von sich durch die Schlitze oder Langlöcher erstreckende Kopfschrauben oder Bolzen an dem Führungsmittel befestigbar sein.

Ein Begrenzungsmittel könnte einen inneren Teil und einen äußeren Teil aufweisen, wobei ein äußerer Teil an einer äußeren Oberfläche eines unteren Abschnitts eines jeweiligen inneren Teils befestigbar ist.

Falls gemäß Patentanspruch 2 zwei Platten vorgesehen sind, weist jede Platte mindestens zwei Schlitze oder Langlöcher auf, welche relativ zu einer Fahrzeuglängsachse einen Winkel aufweisen. Die Platte könnte mit Hilfe von sich durch die Schlitze oder Langlöcher erstreckende Kopfschrauben oder Bolzen an dem Führungsmittel befestigbar sein.

Anhand der Zeichnung werden nachfolgend die Erfindung sowie weitere Vorteile und vorteilhafte Weiterbildungen und Ausgestaltungen der Erfindung näher beschrieben und erläutert.

Es zeigt jeweils in einer schematischen Darstellung:
- Fig. 1: eine perspektivische Ansicht von oben und von der Seite eines Ausführungsbeispiels einer erfindungsgemäßen Kopplungsvorrichtung,
- Fig. 2: eine perspektivische Ansicht von unten und von der Seite eines Ausführungsbeispiels einer erfindungsgemäßen Kupplungsvorrichtung,
- Fig. 3: eine Ansicht direkt von hinten eines Ausführungsbeispiels einer erfindungsgemäßen Kopplungsvorrichtung,
- Fig. 4: eine Ansicht direkt von unten eines Ausführungsbeispiels einer erfindungsgemäßen Kopplungsvorrichtung,
- Fig. 5: eine perspektivische Ansicht der Platte zum Verkeilen aus Fig. 1,
- Fig. 6: eine perspektivische Ansicht eines weiteren erfindungsgemäßen Ausführungsbeispiels,
- Fig. 7: eine Ansicht unmittelbar von unten auf einen Teil der Kopplungsvorrichtung aus Fig. 5 und
- Fig. 8: eine Ansicht unmittelbar von hinten der Kopplungsvorrichtung aus Fig. 5.

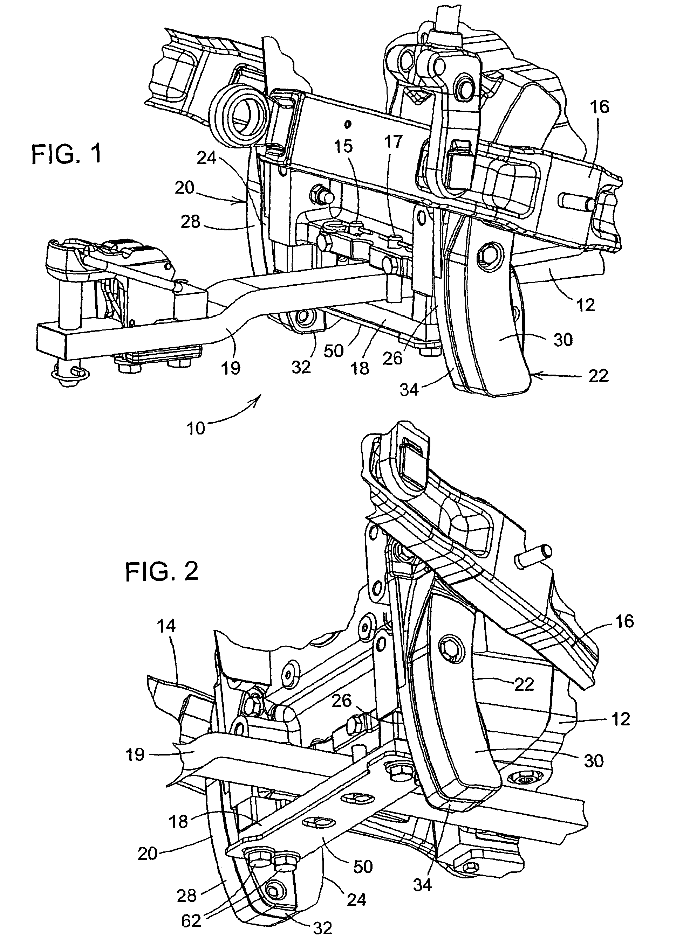

Die Fig. 1 und 2 zeigen eine Kopplungsvorrichtung 10, welche an einem Rahmen 12 eines landwirtschaftlichen Nutzfahrzeugs, nämlich eines Traktors, angebaut ist. Die Kopplungsvorrichtung 10 umfasst zwei Unterlenker 14, 16, welche drehbar/schwenkbar an dem Rahmen 12 in herkömmlicher Art und Weise angebracht sind. Ein Führungsmittel 18 ist an dem Rahmen 12 befestigt und erstreckt sich seitlich zwischen den Unterlenkern 14, 16 und führt beziehungsweise unterstützt ein herkömmliches Zugpendel 19. Es sind zwei Bolzen 15, 17 zum Begrenzen der Seitwärtsbewegung des Zugpendels 19 vorgesehen. Zwei Begrenzungsmittel 20, 22 sind an gegenüberliegenden Seiten des Rahmens 12 befestigt. Jedes Begrenzungsmittel 20, 22 umfasst einen inneren Teil 24, 26 und einen äußeren Teil 28, 30. Jedes äußere Teil 28, 30 ist an einer äußeren Oberfläche eines unteren Bereichs des jeweiligen inneren Teils 24, 26 angebracht. Jedes innere Teil 24, 26 umfasst ein oberes Ende, welches an einer Seite des Rahmens 12 befestigt ist und welches sich im Wesentlichen nach unten zu einem unteren freien Ende 32, 34 erstreckt.

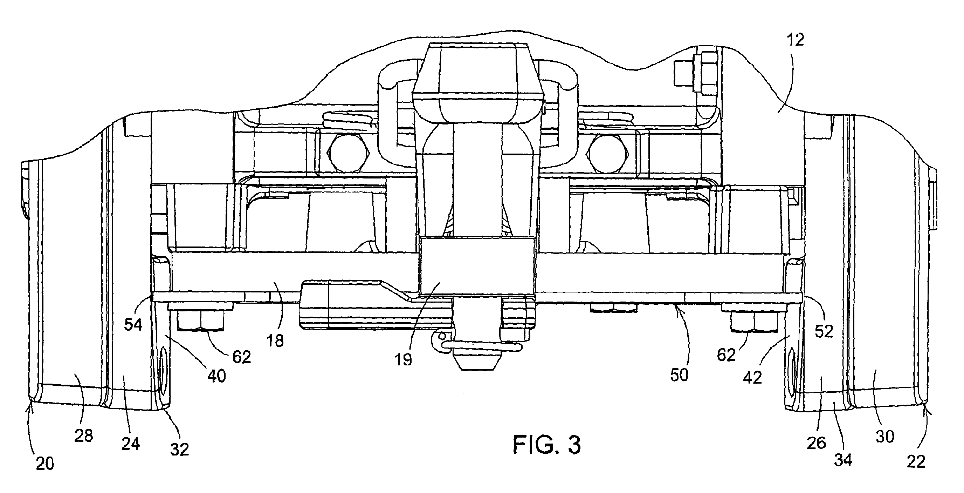

Fig. 3 ist entnehmbar, dass jedes innere Teil 24, 26 eine innere schräge Oberfläche 40, 42 aufweist, welche sich durch ein schmaleres hinteres Ende und durch einen breiteren vorderen Bereich des jeweiligen Begrenzungsmittels 20, 22 ergibt, so dass die Oberflächen 40, 42 im Wesentlichen nach innen und zum Teil nach hinten orientiert sind.

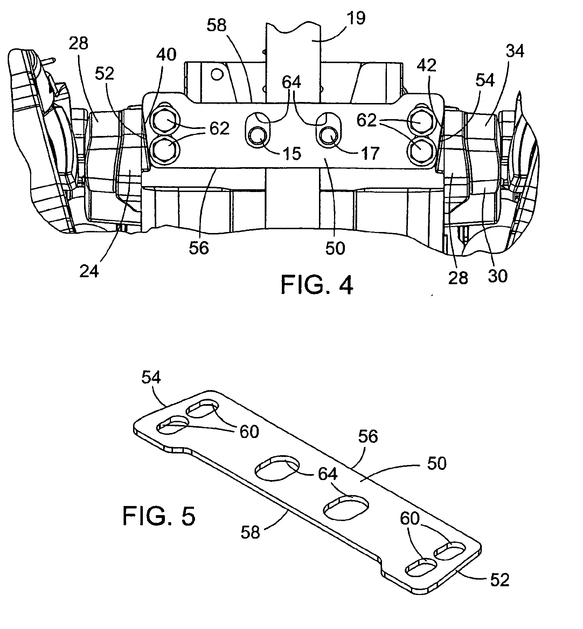

Insbesondere den Fig. 2, 3 und 4 kann entnommen werden, dass eine Platte 50 zum Verkeilen unterhalb des Führungsmittels 18 angeordnet und daran befestigt bzw. festklemmbar angeordnet ist. Die Platte 50 erstreckt sich im Wesentlichen seitlich bzw. lateral von einer linken endseitigen Oberfläche 52 zu einer rechten endseitigen Oberfläche 54. Die Platte 50 weist eine kürzere vordere Seite 56 und eine längere hintere Seite 58 auf, so dass die endseitigen Oberflächen 52, 54 schräg zueinander angeordnet sind, um im Wesentlichen komplementär an den inneren Oberflächen 40, 42 der jeweiligen inneren Teile 24, 26 zur Anlage zu kommen. Ein Satz von länglich ausgebildeten Löchern - Langlöchern 60 - sind in der Nähe des Endbereichs der Platte 50 ausgebildet. Die Platte 50 ist an der Unterseite des Führungsmittels 18 mit Hilfe von Kopfschrauben bzw. Bolzen 62 befestigt, welche sich durch die Langenlöcher 60 erstrecken, wobei die Position der Platte 50 relativ zum Führungsmittel 18 eingestellt werden kann. Zwei Langlöcher 64 sind voneinander beabstandet und in einem mittleren Abschnitt der Platte 50 angeordnet, um die Bolzen 15, 17 zum Teil aufzunehmen und eine Relativbewegung zwischen der Platte 50 und den Bolzen 15, 17 zu ermöglichen.

Fig. 3 ist entnehmbar, dass das untere freie Ende 32, 34 eines jeden Begrenzungsmittels 20, 22 unterhalb einer Ebene angeordnet ist, welche durch die untere Oberfläche des Führungsmittels 18 definiert ist. Die Platte 50 ist länger als das Führungsmittel 18 ausgebildet und steht bezüglich den linken und rechten Enden des Führungsmittels 18 seitlich über. Hierdurch kommen die endseitigen Oberflächen 52, 54 der Platte 50 an den inneren Oberflächen 40, 42 der jeweiligen inneren Teile 24, 26 zur Anlage und unterstützen die unteren Abschnitte der Begrenzungsmittel 20, 22 gegen seitlich wirkende Kräfte, welche von den Unterlenkern 14, 16 ausgeübt bzw. übertragen werden können.

Die endseitigen Oberflächen 52, 54 der Platte 50 sind vorzugsweise angewinkelt ausgebildet, so dass die von den Begrenzungsmitteln 20, 22 übertragenen seitlich wirkenden Kräfte bzw. Lasten nicht die Klemmwirkung der Bolzen 62 übersteigen. Die Platte 50 kann mit einer Vielzahl von Führungsmitteln für Zugpendel und mit vertikal angeordneten Abstandshalter-Kombinationen für Zugpendel verwendet werden. Die vertikale Länge des konischen Bereichs der Begrenzungsmittel 22, 24 kann eingestellt werden, um an die Höhe der Platte 50 gängiger Führungsmittel für Zugpendel angepasst zu werden.

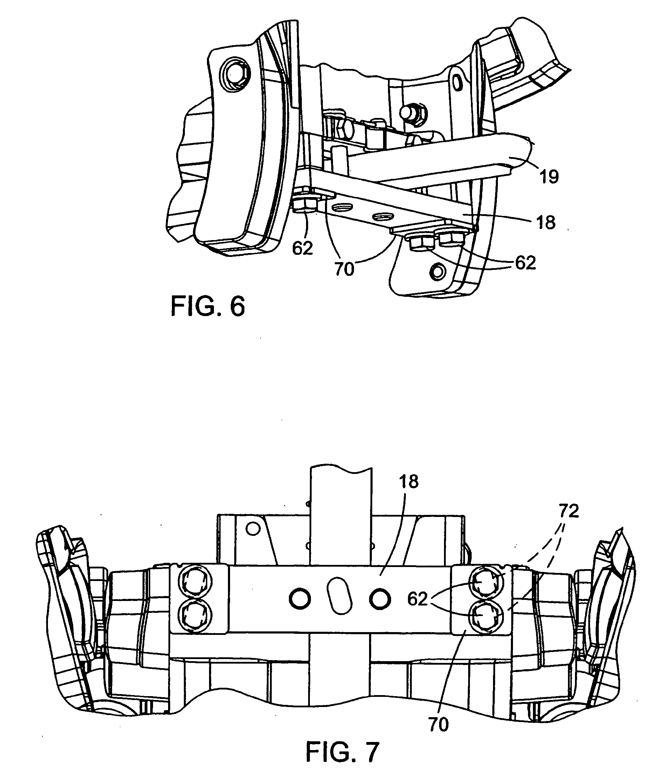

Die Fig. 6 bis 8 zeigen ein alternatives Ausführungsbeispiel zu der einen einzelnen, sich über die gesamte laterale Breite erstreckenden Platte 50. Demgemäß sind zwei voneinander beabstandet angeordnete Platten 70 vorgesehen, die an den gegenüberliegenden Enden des Führungsmittels 18 angebracht sind. Jede der Platten 70 weist zwei Langlöcher 72 auf, welche die zur Befestigung dienenden Bolzen 62 aufnehmen, so dass jede der Platten 70 relativ zu dem Führungsmittel 18 eingestellt werden kann.

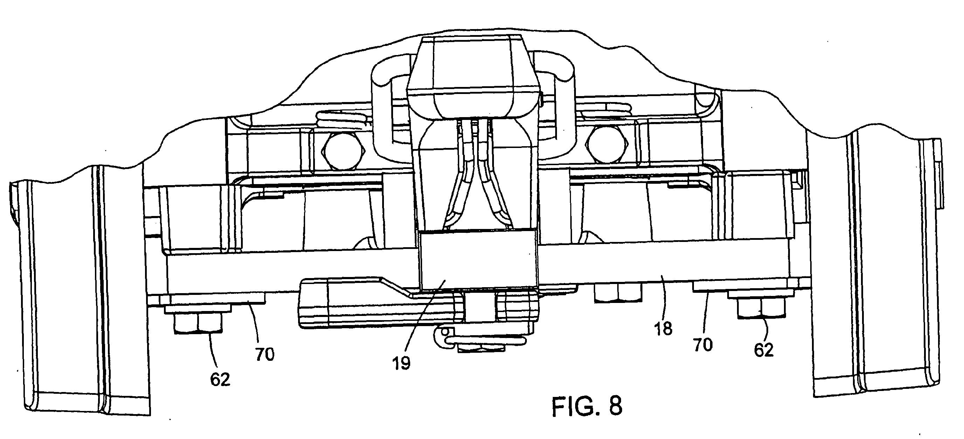

Fig. 8 ist entnehmbar, dass jede der Platten 70 seitlich über die rechten und linken Enden des Führungsmittels 18 herausragen. Demgemäß kommt jede Platte 70 jeweils mit einer inneren Oberfläche 40, 42 des jeweiligen inneren Teils 24, 26 zur Anlage und unterstützt so den unteren Bereich der Begrenzungsmittel 20, 22 gegen seitlich wirkende Kräfte, welche von den Unterlenkern 14, 16 ausgeübt werden.

## Patentansprüche

1. Kopplungsvorrichtung zum Anbringen an einem Rahmen (12) eines industriellen oder landwirtschaftlichen Nutzfahrzeugs, insbesondere an einen Traktor, mit zwei Unterlenkern (14, 16), einem Führungsmittel (18) für ein Zugpendel (19), zwei Begrenzungsmitteln (20, 22) und einer Platte (50) zum Verkeilen, wobei die Unterlenker (14, 16) drehbar/schwenkbar an dem Rahmen (12) angebracht sind, wobei das Führungsmittel (18) zwischen den Unterlenkern (14, 16) an dem Rahmen (12) befestigbar ist, wobei die zwei Begrenzungsmittel (20, 22) an gegenüberliegenden Seiten des Rahmens (12) befestigbar sind, wobei jedes Begrenzungsmittel (20, 22) ein oberes Ende aufweist, welches an einer Seite des Rahmens (12) befestigbar ist und welches sich im Wesentlichen nach unten zu einem unteren freien Ende (32, 34) erstreckt, wobei die Platte (50) unterhalb des Führungsmittels (18) anbringbar - insbesondere befestigbar - ist, wobei die Platte (50) sich im Wesentlichen lateral von einer linken endseitigen Oberfläche (52) zu einer rechten endseitigen Oberfläche (54) erstreckt und wobei jeweils eine endseitige Oberfläche (52, 54) komplementär mit einer inneren Oberfläche (40, 42) des jeweiligen Begrenzungsmittels (20, 22) zur Anlage kommt.

2. Kopplungsvorrichtung zum Anbringen an einem Rahmen (12) eines industriellen oder landwirtschaftlichen Nutzfahrzeugs, insbesondere an einen Traktor, mit zwei Unterlenkern (14, 16), einem Führungsmittel (18) für ein Zugpendel (19), zwei Begrenzungsmitteln (20, 22) und zwei Platten (70) zum Verkeilen, wobei die Unterlenker (14, 16) drehbar/schwenkbar an dem Rahmen (12) angebracht sind, wobei das Führungsmittel (18) zwischen den Unterlenkern (14, 16) an dem Rahmen (12) befestigbar ist, wobei die zwei Begrenzungsmittel (20, 22) an gegenüberliegenden Seiten des Rahmens (12) befestigbar sind, wobei jedes Begrenzungsmittel (20, 22) ein oberes Ende aufweist, welches an einer Seite des Rahmens (12) befestigbar ist und welches im Wesentlichen sich nach unten zu einem unteren freien Ende (32, 34) erstreckt, wobei die Platten (70) unterhalb des Führungsmittels (18) anbringbar - insbesondere befestigbar - sind, wobei die Platten (70) - vorzugsweise voneinander beabstandet - angeordnet und an gegenüberliegenden Enden des Führungsmittels (18) befestigbar sind und wobei jede Platte (70) eine endseitige Oberfläche aufweist, welche komplementär mit einer inneren Oberfläche (40, 42) eines jeweiligen Begrenzungsmittels (20, 22) zur Anlage kommt.

3. Kopplungsvorrichtung nach Anspruch 1 oder 2, **dadurch gekennzeichnet, dass** jedes Begrenzungsmittel (20, 22) von einer breiteren vorderen Seite zu einer schmaleren hinteren Seite konisch ausgebildet ist, um eine innere Oberfläche (40, 42) zu bilden, welche nach innen und nach hinten gerichtet ist.

4. Kopplungsvorrichtung nach Anspruch 3, **dadurch gekennzeichnet, dass** die endseitigen Oberflächen (52, 54) der Platte (50) bzw. der Platten (70) angewinkelt ausgebildet sind, also insbesondere nicht parallel zueinander orientiert sind, um in komplementären Eingriff mit der inneren Oberfläche (40, 42) des jeweiligen Begrenzungsmittels (20, 22) zu kommen.

5. Kopplungsvorrichtung nach einem der Ansprüche 1 bis 4, **dadurch gekennzeichnet, dass** die Platte (50) bzw. die Platten (70) in verschiedenen Relativpositionen an dem Führungsmittel (18) befestigbar ist.

6. Kopplungsvorrichtung nach einem der vorhergehenden Ansprüche, **dadurch gekennzeichnet, dass** die Platte (50, 70) eine vordere Seite (56) und eine hintere Seite (58) aufweist, wobei in lateraler Richtung die hintere Seite (58) länger als die vordere Seite (56) ist.

7. Kopplungsvorrichtung nach einem der vorhergehenden Ansprüche, **dadurch gekennzeichnet, dass** das untere freie Ende (32, 34) eines Begrenzungsmittels (20, 22) unterhalb einer Ebene angeordnet ist, welche durch die untere Oberfläche des Führungsmittels (18) definiert ist.

8. Kopplungsvorrichtung nach einem der vorhergehenden Ansprüche, **dadurch gekennzeichnet, dass** die Platte (50, 70) mehrere Schlitze oder Langlöcher (60) aufweist, und dass die Platte (50, 70) mit Hilfe von sich durch die Schlitze oder Langlöcher (60) erstreckenden Kopfschrauben oder Bolzen (62) an dem Führungsmittel (18) befestigbar ist.

9. Kopplungsvorrichtung nach einem der vorhergehenden Ansprüche, **dadurch gekennzeichnet, dass** ein Begrenzungsmittel (20, 22) einen inneren Teil (24, 26) und einen äußeren Teil (28, 30) aufweist, wobei ein äußerer Teil (28, 30) an einer äußeren Oberfläche eines unteren Abschnitts eines jeweiligen inneren Teils (24, 26) befestigbar ist.

10. Kopplungsvorrichtung nach einem der Ansprüche 2 bis 9, **dadurch gekennzeichnet, dass** jede Platte (70) mindestens zwei Schlitze oder Langlöcher aufweist, welche relativ zu einer Fahrzeuglängsachse einen Winkel aufweisen, und dass die Platte (70) mit Hilfe von sich durch die Schlitze oder Langlöcher erstreckenden Kopfschrauben oder Bolzen (62) an dem Führungsmittel (18) befestigbar ist.

## Claims

1. Coupling device for attaching to a frame (12) of an industrial or agricultural utility vehicle, in particular to a tractor, with two lower links (14, 16), a guide means (18) for an adjustable drawbar (19), two limiting means (20, 22), and a wedging plate (50), wherein the lower links (14, 16) are attached rotatably/pivotably to the frame (12), wherein the guide means (18) is fastenable to the frame (12) between the lower links (14, 16), wherein the two limiting means (20, 22) are fastenable to opposite sides of the frame (12), wherein each limiting means (20, 22) has an upper end which is fastenable to one side of the frame (12) and which extends essentially downwards to a lower free end (32, 34), wherein the plate (50) is attachable - in particular fastenable - below the guide means (18), wherein the plate (50) extends essentially laterally from a left end surface (52) to a right end surface (54), and wherein in each case one end surface (52, 54) comes to bear in a complementary manner against an inner surface (40, 42) of the respective limiting means (20, 22).

2. Coupling device for attaching to a frame (12) of an industrial or agricultural utility vehicle, in particular to a tractor, with two lower links (14, 16), a guide means (18) for an adjustable drawbar (19), two limiting means (20, 22) and two wedging plates (70), wherein the lower links (14, 16) are attached rotatably/pivotably to the frame (12), wherein the guide means (18) is fastenable to the frame (12) between the lower links (14, 16), where the two limiting means (20, 22) are fastenable to opposite sides of the frame (12), wherein each limiting means (20, 22) has an upper end which is fastenable to one side of the frame (12) and which extends essentially downwards to a lower free end (32, 34), wherein the plates (70) are attachable - in particular fastenable - below the guide means (18), wherein the plates (70) are arranged - preferably spaced apart from each other - and are fastenable to opposite ends of the guide means (18), and wherein each plate (70) has an end surface which comes to bear in a complementary manner against an inner surface (40, 42) of a respective limiting means (20, 22).

3. Coupling device according to Claim 1 or 2, **characterized in that** each limiting means (20, 22) is of conical design from a wider front side to a narrower rear side in order to form an inner surface (40, 42) which is directed inwards and rearwards.

4. Coupling device according to Claim 3, **characterized in that** the end surfaces (52, 54) of the plate (50) or of the plates (70) are of angled design, i.e. in particular are not oriented parallel to each other, in order to come into complementary engagement with the inner surface (40, 42) of the respective limiting means (20, 22).

5. Coupling device according to one of Claims 1 to 4, **characterized in that** the plate (50) or the plates (70) is/are fastenable to the guide means (18) in different relative positions.

6. Coupling device according to one of the preceding claims, **characterized in that** the plate (50, 70) has a front side (56) and a rear side (58), the rear side (58) being longer in the lateral direction than the front side (56).

7. Coupling device according to one of the preceding claims, **characterized in that** the lower free end (32, 34) of a limiting means (20, 22) is arranged below a plane which is defined by the lower surface of the guide means (18).

8. Coupling device according to one of the preceding claims, **characterized in that** the plate (50, 70) has a plurality of slots or elongated holes (60), and **in that** the plate (50, 70) is fastenable to the guide means (18) with the aid of head screws or bolts (62) extending through the slots or elongated holes (60).

9. Coupling device according to one of the preceding claims, **characterized in that** a limiting means (20, 22) has an inner part (24, 26) and an outer part (28, 30), an outer part (28, 30) being fastenable to an outer surface of a lower section of a respective inner part (24, 26).

10. Coupling device according to one of Claims 2 to 9, **characterized in that** each plate (70) has at least two slots or elongated holes which are at an angle relative to a longitudinal axis of the vehicle, and **in that** the plate (70) is fastenable to the guide means (18) with the aid of head screws or bolts (62) extending through the slots or elongated holes.

## Revendications

1. Dispositif d'accouplement destiné à être monté sur un châssis (12) d'un véhicule utilitaire industriel ou agricole, en particulier sur un tracteur, comprenant deux bras de liaison inférieurs (14, 16), un moyen de guidage (18) pour un pendule de traction (19), deux moyens de limitation (20, 22) et une plaque (50) pour le calage, les bras de liaison inférieurs (14, 16) étant montés de manière rotative/pivotante sur le châssis (12), le moyen de guidage (18) pouvant être fixé entre les bras de liaison inférieurs (14, 16) sur le châssis (12), les deux moyens de limitation (20, 22) pouvant être fixés sur des côtés opposés du châssis (12), chaque moyen de limitation (20, 22) présentant une extrémité supérieure qui peut être fixée à un côté du châssis (12) et qui s'étend essentiellement vers le bas jusqu'à une extrémité inférieure libre (32, 34), la plaque (50) pouvant être montée - notamment fixée - en dessous du moyen de guidage (18), la plaque (50) s'étendant essentiellement latéralement depuis une surface (52) gauche du côté de l'extrémité, jusqu'à une surface (54) droite du côté de l'extrémité, et à chaque fois une surface du côté de l'extrémité (52, 54) venant en appui de manière complémentaire avec une surface interne (40, 42) du moyen de limitation (20, 22) respectif.

2. Dispositif d'accouplement destiné à être monté sur un châssis (12) d'un véhicule utilitaire industriel ou agricole, en particulier sur un tracteur, comprenant deux bras de liaison inférieurs (14, 16), un moyen de guidage (18) pour un pendule de traction (19), deux moyens de limitation (20, 22) et deux plaques (70) pour le calage, les bras de liaison inférieurs (14, 16) étant montés de manière rotative/pivotante sur le châssis (12), le moyen de guidage (18) pouvant être fixé entre les bras de liaison inférieurs (14, 16) sur le châssis (12), les deux moyens de limitation (20, 22) pouvant être fixés sur des côtés opposés du châssis (12), chaque moyen de limitation (20, 22) présentant une extrémité supérieure qui peut être fixée à un côté du châssis (12) et qui s'étend essentiellement vers le bas jusqu'à une extrémité inférieure libre (32, 34), les plaques (70) pouvant être montées - notamment fixées - en dessous du moyen de guidage (18), les plaques (70) étant disposées - de préférence à distance l'une de l'autre - et pouvant être fixées à des extrémités opposées du moyen de guidage (18), et chaque plaque (70) présentant une surface du côté de l'extrémité, qui vient en appui de manière complémentaire avec une surface interne (40, 42) du moyen de limitation (20, 22) respectif.

3. Dispositif d'accouplement selon la revendication 1 ou 2, **caractérisé en ce que** chaque moyen de limitation (20, 22) est réalisé sous forme conique depuis un côté avant plus large jusqu'à un côté arrière plus étroit, afin de former une surface interne (40, 42) qui est orientée vers l'intérieur et vers l'arrière.

4. Dispositif d'accouplement selon la revendication 3, **caractérisé en ce que** les surfaces du côté de l'extrémité (52, 54) de la plaque (50) ou des plaques (70) sont réalisées sous forme coudée, c'est-à-dire en particulier ne sont pas orientées parallèlement l'une à l'autre, afin de venir en engagement complémentaire avec la surface interne (40, 42) du moyen de limitation (20, 22) respectif.

5. Dispositif d'accouplement selon l'une quelconque des revendications 1 à 4, **caractérisé en ce que** la plaque (50) ou les plaques (70) peuvent être fixées dans différentes positions relatives sur le moyen de guidage (18).

6. Dispositif d'accouplement selon l'une quelconque des revendications précédentes, **caractérisé en ce que** la plaque (50, 70) présente un côté avant (56) et un côté arrière (58), le côté arrière (58) étant plus long dans la direction latérale que le côté avant (56).

7. Dispositif d'accouplement selon l'une quelconque des revendications précédentes, **caractérisé en ce que** l'extrémité inférieure libre (32, 34) d'un moyen de limitation (20, 22) est disposée sous un plan qui est défini par la surface inférieure du moyen de guidage (18).

8. Dispositif d'accouplement selon l'une quelconque des revendications précédentes, **caractérisé en ce que** la plaque (50, 70) présente plusieurs fentes ou trous oblongs (60) et **en ce que** la plaque (50, 70) peut être fixée sur le moyen de guidage (18) à l'aide de vis à tête ou de boulons (62) s'étendant à travers les fentes ou les trous oblongs (60).

9. Dispositif d'accouplement selon l'une quelconque des revendications précédentes, **caractérisé en ce qu'**un moyen de limitation (20, 22) présente une partie intérieure (24, 26) et une partie extérieure (28, 30), une partie extérieure (28, 30) pouvant être fixée sur une surface extérieure d'une portion inférieure d'une partie intérieure respective (24, 26).

10. Dispositif d'accouplement selon l'une quelconque des revendications 2 à 9, **caractérisé en ce que** chaque plaque (70) présente au moins deux fentes ou trous oblongs, qui présentent, par rapport à un axe longitudinal du véhicule, un certain angle, et **en ce que** la plaque (70) peut être fixée sur le moyen de guidage (18) à l'aide de vis à tête ou de boulons (62) s'étendant à travers les fentes ou les trous oblongs.
